(19) **Europäisches Patentamt / European Patent Office / Office européen des brevets**

(11) **EP 1 662 123 B1**

(12) **EUROPEAN PATENT SPECIFICATION**

(45) Date of publication and mention
of the grant of the patent:
**05.11.2014 Bulletin 2014/45**

(51) Int Cl.:
*F02D 41/02* (2006.01)  *F02D 41/40* (2006.01)
*F01N 3/20* (2006.01)  *F02D 9/04* (2006.01)

(21) Application number: **05025715.3**

(22) Date of filing: **24.11.2005**

(54) **Catalyst temperature raise-up system of internal combustion engine**

Vorrichtung zur Erhöhung der Temperatur eines Katalysators für Brennkraftmaschine

Dispositif pour augmenter la température d'un catalyseur de moteur à combustion interne

(84) Designated Contracting States:
**DE FR GB**

(30) Priority: **26.11.2004 JP 2004342391**

(43) Date of publication of application:
**31.05.2006 Bulletin 2006/22**

(73) Proprietor: **TOYOTA JIDOSHA KABUSHIKI KAISHA**
**Toyota-shi, Aichi-ken, 471-8571 (JP)**

(72) Inventors:
• **OBA, Takahiro**
**c/o TOYOTA JIDOSHA KABUSHIKI KAISHA.**
**Toyota-shi,**
**Aichi-ken,471-8571 (JP)**

• **HASHIZUME,Takeshi**
**c/o TOYOTA JIDOSHA KABUSHIKI KAISHA.**
**Toyota-shi,**
**Aichi-ken,471-8571 (JP)**
• **GOTO, Isamu**
**c/o TOYOTA JIDOSHA KABUSHIKI KAISHA.**
**Toyota-shi,**
**Aichi-ken,471-8571 (JP)**

(74) Representative: **TBK**
**Bavariaring 4-6**
**80336 München (DE)**

(56) References cited:
**EP-A2- 1 096 126**   **EP-A2- 1 288 473**
**GB-A- 2 324 256**   **JP-A- 2004 150 415**

**Description**

(BACKGROUND OF THE INVENTION)

(Field of the Invention)

The present invention relates to a catalyst temperature raise-up system of an internal combustion engine for raising a temperature of a catalyst provided on an exhaust passage of the internal combustion engine and having an oxidizing function.

(Description of the Related Art)

As a catalyst temperature raise-up system of an internal combustion engine for raising a temperature of a catalyst provided on an exhaust passage of the internal combustion engine and having an oxidizing function, there is a system for raising the temperature of the catalyst by executing sub fuel injection in addition to main fuel injection in the internal combustion engine.

In this type of catalyst temperature raise-up system of the internal combustion engine, when oxidizing and removing particulate matter (PM) deposited on a particulate filter carrying an oxidation catalyst, there is a case of executing the sub fuel injection at later timing than main fuel injection and at non-ignition timing in order to raise the temperature of the oxidation catalyst and the particulate filter as well. Japanese Patent Application Laid-Open No.2004-150415 discloses a technology for decreasing (throttling) a flow rate of the exhaust gas by an exhaust throttle valve provided in the exhaust passage in the case of performing this type of sub fuel injection when in an idling state. Further, Japanese Patent No.3536739 and Japanese Patent Application Laid-Open No.2000-179326 disclose technologies related to this type of sub fuel injection.

In the catalyst temperature raise-up system of the internal combustion engine for raising the temperature of the catalyst provided on the exhaust passage of the internal combustion engine and having the oxidizing function, when the catalyst is in an activation state, there is a case of executing the sub fuel injection within the cylinder at the later timing than the main fuel injection and at the non-ignition timing in the combustion cycle. The sub fuel injection conducted at the timing described above will hereinafter be termed post fuel injection.

At least part of the fuel injected by the post fuel injection is discharged in an unburned state from within the cylinder. Therefore, the unburned fuel is supplied to the catalyst. Then, the unburned fuel is oxidized by the catalyst, and a temperature of the catalyst is raised by oxidation heat evolved thereat. At this time, the temperature of the catalyst is controlled at a target temperature in a way that adjusts the fuel injection quantity by way of the post fuel injection.

Moreover, if the exhaust throttle valve is provided in the exhaust passage disposed downstream of the catalyst and when raising the temperature of the catalyst, there is a case where the exhaust flow rate is decreased by controlling the exhaust throttle valve in a valve closing direction, i.e., so-called exhaust throttling is carried out.

When the exhaust throttling is conducted by the exhaust throttle valve, a pressure within the exhaust passage disposed upstream of the exhaust throttle valve (which will hereinafter be referred to as an intra upstream-side exhaust passage pressure) rises, and consequently an engine load of the internal combustion engine increases. Therefore, it follows that there rises a temperature of the exhaust gas discharged from the internal combustion engine, i.e., a temperature of the exhaust gas flowing through the catalyst. As a result, the temperature of the catalyst can be raised up.

In the state of the exhaust throttling being conducted by the exhaust throttle valve, however, in the case of further executing the post fuel injection, the fuel injected by the post fuel injection gets hard to be discharged in the unburned state from within the cylinder, so that the intra upstream-side exhaust passage pressure is high. Hence, there exists a case, wherein the unburned fuel supplied to the catalyst becomes smaller than in the case of executing the post fuel injection in a state of the exhaust throttling not being conducted by the exhaust throttle valve. As a consequence, the unburned fuel having a quantity needed for raising the temperature of the catalyst up to the target temperature is not supplied to the catalyst, and the temperature of the catalyst possibly gets hard to rise up to the target temperature.

(SUMMARY OF THE INVENTION)

It is an object of the present invention, which was devised in view of the problems given above, to provide, in a catalyst temperature raise-up system of an internal combustion engine for raising a temperature of a catalyst provided on an exhaust passage of the internal combustion engine and having an oxidizing function, a technology capable of controlling, when raising up the temperature of the catalyst, the temperature of the catalyst at a target temperature with higher accuracy.

The present invention adopts the following means in order to solve the problems described above.

Namely, when executing the post fuel injection in order to raise a temperature of a catalyst provided on the exhaust passage of the internal combustion engine and having the oxidizing function, in the case of the exhaust throttling being conducted, a fuel injection quantity per unit time injected by the post fuel injection (which will hereinafter be referred to as a post fuel injection quantity per unit) is set larger than in the case of the exhaust throttling not being conducted.

More specifically, according to the present invention, a catalyst temperature raise-up system of an internal combustion engine, comprising post fuel injection means executing sub fuel injection within a cylinder at later timing than main fuel injection and at non-ignition timing in a combustion cycle of said internal combustion engine,

when a catalyst provided on an exhaust passage of said internal combustion engine and having an oxidizing function is in an activation state, said catalyst being supplied with an unburned fuel by said post fuel injection means executing the sub fuel injection, and thereby the temperature of the catalyst being raised up to a target temperature,

wherein further comprising an exhaust throttle valve provided on said exhaust passage disposed downstream of said catalyst, and

characterized in that when the sub fuel injection is executed by said post fuel injection means in a state of exhaust throttling being conducted by said exhaust throttle valve, an sub fuel injection quantity per unit time injected by said post fuel injection means is set larger than when the sub fuel injection is executed by said post fuel injection means in a state of exhaust throttling not being conducted by said exhaust throttle valve.

Herein, the target temperature may take a value different depending on a type of the catalyst and a purpose of raising the temperature of the catalyst etc, and may also take a value that is predetermined by an experiment or a like manner.

According to the present invention, when the temperature of the catalyst is raised up to the target temperature and when the catalyst is in the activation state, the post fuel injection is executed by the post fuel injection means. This post fuel injection is carried out at the later timing than the main fuel injection and at the non-ignition timing in the combustion cycle of the internal combustion engine. Herein, the non-ignition timing connotes timing at which a large proportion of the injected fuel is not ignited when the fuel is injected into the cylinder.

Further, according to the present invention, the exhaust throttle valve is provided in the exhaust passage disposed downstream of the catalyst. As described above, when the post fuel injection is executed, in the case of the exhaust throttling being conducted by the exhaust throttle valve, there is an instance, wherein the unburned fuel supplied to the catalyst becomes smaller than in the case of the exhaust throttling not being conducted by the exhaust throttle valve.

Such being the case, according to the present invention, when the post fuel injection is executed, in the case of the exhaust throttling being conducted by the exhaust throttle valve, the post fuel injection quantity per unit is set larger than in the case of the exhaust throttling not being conducted by the exhaust throttle valve.

With this contrivance, even in the case of executing the post fuel injection in the state of the exhaust throttling being conducted, the catalyst can be supplied with the unburned fuel having the quantity necessary for heating up the catalyst up to the target temperature.

Therefore, according to the present invention, when raising the temperature of the catalyst provided on the exhaust passage of the internal combustion engine and having the oxidizing function, the temperature of the catalyst can be controlled at the target temperature with the higher accuracy.

In the present invention, in the case of further comprising intra exhaust passage pressure detecting means detecting an intra upstream-side exhaust passage pressure, when executing the post fuel injection in the state of the exhaust throttling being conducted by the exhaust throttle valve, the post fuel injection quantity per unit may be set larger as the intra upstream-side exhaust passage pressure detected by the intra exhaust passage pressure detecting means is higher.

In the case of executing the post fuel injection, as the intra upstream-side exhaust passage pressure becomes higher, the fuel injected by the post fuel injection gets harder to be discharged in an unburned state from within the cylinder. Therefore, the quantity of the unburned fuel supplied to the catalyst possibly becomes smaller.

This being the case, as described above, when executing the post fuel injection in the state of the exhaust throttling being conducted by the exhaust throttle valve, the post fuel injection quantity per unit is set larger as the intra upstream-side exhaust passage pressure becomes higher. With this contrivance, the catalyst can be supplied with the unburned fuel having the quantity necessary for raising the catalyst up to the target temperature.

In the present invention, in the case of further comprising catalyst temperature detecting means detecting a temperature of the catalyst, intra exhaust passage pressure detecting means detecting an intra upstream-side exhaust passage pressure and an exhaust temperature detecting means detecting an exhaust temperature within said exhaust passage disposed upstream of the exhaust throttle valve, an operation gas quantity within the cylinder may be calculated by operation gas quantity calculating means on the basis of the intra upstream-side exhaust passage pressure detected by the intra exhaust passage pressure detecting means and the exhaust temperature detected by the exhaust temperature detecting means. Then, when executing the post fuel injection, the post fuel injection quantity per unit may be determined based on a difference between the temperature of the catalyst that is detected by the catalyst temperature detecting means and the target temperature and based on the operation gas quantity calculated by the operation gas quantity calculating means.

In the case of the exhaust throttling not being conducted, the operation gas quantity within the cylinder becomes substantially equal to an intake air quantity. Hence, the post fuel injection quantity per unit needed for raising the temperature of the catalyst up to the target temperature, can be calculated based on the difference between the catalyst temperature at a point of time when executing the post fuel injection and the target temperature and based on the intake air quantity.

In the case of performing the exhaust throttling, however, the gas (the exhaust gas) gets hard to be discharged from within the cylinder because of a rise in the intra upstream-side exhaust passage pressure, and a gas remaining within the cylinder (which will hereinafter simply be termed a residual gas) becomes easy to increase. Therefore, the operation gas quantity when performing the exhaust throttling possibly gets larger by a residual gas quantity than the intake air quantity.

Accordingly, when executing the post fuel injection in the state of the exhaust throttling being conducted, as when executing the post fuel injection in the state of the exhaust throttling not being conducted, if the post fuel injection quantity per unit is determined based on the difference between the catalyst temperature at the point of time when executing the post fuel injection and the target temperature and based on the intake air quantity, there is a case where the fuel injected by the post fuel injection might be insufficient for the operation gas quantity.

Such being the case, when executing the post fuel injection in the state of the exhaust throttling being conducted, the operation gas quantity within the cylinder is calculated based on the intra upstream-side exhaust passage pressure detected by the intra exhaust passage pressure detecting means and based on the exhaust temperature detected by the exhaust temperature detecting means. Then, the post fuel injection quantity per unit is determined based on the difference between the catalyst temperature (i.e., the catalyst temperature at the point of time when executing the post fuel injection) detected by the catalyst temperature detecting means and the target temperature and based on the operation gas quantity.

With this contrivance, in the case of the exhaust throttling being conducted by the exhaust throttle valve when executing the post fuel injection, the post fuel injection quantity per unit can be set larger than in the case of the exhaust throttling not being conducted by the exhaust throttle valve. As a result, even in the case of the exhaust throttling being conducted when executing the post fuel injection, the catalyst can be supplied with the unburned fuel having the quantity needed for raising the catalyst up to the target temperature.

The above and other objects, features and advantages of the present invention will become more readily apparent to those skilled in the art from the following detailed description of preferred embodiments of the present invention taken in conjunction with the accompanying drawings.

(BRIEF DESCRIPTION OF THE DRAWINGS)

FIG. 1 is a view showing outlines of configurations of an internal combustion engine and intake/exhaust systems thereof according to an embodiment of the present invention;

FIG. 2 is a graph showing a relationship between a post fuel injection quantity per unit and a temperature of an oxidation catalyst;

FIG. 3 is a flowchart showing a control routine of post fuel injection quantity per unit control according to a first embodiment of the present invention;

FIG. 4 is a map showing a relationship between an intra upstream-side exhaust passage pressure and a correction coefficient according to the first embodiment of the present invention; and

FIG. 5 is a flowchart showing a control routine of the post fuel injection quantity per unit control according to a second embodiment of the present invention.

(DESCRIPTION OF THE EMBODIMENT)

An embodiment of a catalyst temperature raise-up system of an internal combustion engine according to the present invention will hereinafter be described with reference to the drawings.

(First Embodiment)

< Outlines of Configurations of Internal Combustion Engine and Intake/Exhaust Systems thereof >

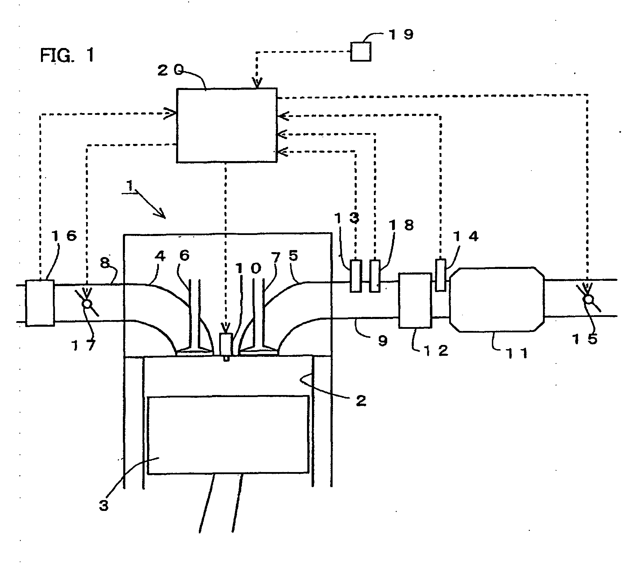

FIG. 1 is a view showing outlines of configurations of an internal combustion engine and intake/exhaust systems thereof according to the first embodiment. An internal combustion engine 1 is a diesel engine for driving a vehicle, which has four cylinders 2. A piston 3 is slidably provided within the cylinder 2 of the internal combustion engine 1. An intake port 4 and an exhaust port 5 are connected to a combustion chamber provided upward within the cylinder 2. Openings, leading to the combustion chamber, of the intake port 4 and of the exhaust port 5 are opened and closed respectively by an intake valve 6 and an exhaust valve 7. The intake port 4 and the exhaust port 5 are connected respectively to an intake passage 8 and an exhaust passage 9. Further, the cylinder 2 is provided with a fuel injection valve 10 that injects a fuel directly into the cylinder 2.

The intake passage 8 is provided with an airflow meter 16 that outputs an electric signal corresponding to an intake air quantity and with a throttle valve 17 for controlling the intake air quantity. The exhaust passage 9 is provided with a filter 11 for trapping PM (particulate matters) contained in the exhaust gas, and an oxidation catalyst 12 is provided upstream of the filter 11.

Further, the exhaust passage 9 disposed upstream of the oxidation catalyst 12 is provided with an upstream-side exhaust temperature sensor 13 that outputs an electric signal corresponding to an exhaust temperature within the exhaust passage 9 and with an exhaust pressure sensor 18 that outputs an electric signal corresponding to a pressure within the exhaust passage 9. Moreover, the exhaust passage 9 disposed downstream of the oxidation catalyst 12 but upstream of the filter 11, is provided with a downstream-side exhaust temperature sensor 14 that outputs an electric signal corresponding to the exhaust temperature within the exhaust passage 9. Furthermore, the exhaust passage 9 disposed downstream of the filter 11 is provided with an exhaust throttle valve 15 for controlling an exhaust gas flow rate. It should be noted that the oxidation catalyst 12 may have an oxidizing function and may also be, e.g., an NOx storage reduction catalyst etc.

An ECU (Electronic Control Unit) 20 for controlling the internal combustion engine 1 is provided in a side-by-side relationship with the internal combustion engine 1 constructed as described above. Connected electrically to the ECU 20 are a variety of sensors such as the airflow meter 16, the upstream-side exhaust temperature sensor 13, the downstream-side exhaust temperature sensor 14, the exhaust pressure sensor 18 and an atmospheric pressure sensor 19 that outputs an electric signal corresponding to an atmospheric pressure. Output signals of the variety of sensors are inputted to the ECU 20. Then, the ECU 20 estimates a temperature of the oxidation catalyst 12 on the basis of an output value(s) of the upstream-side exhaust temperature sensor 13 and/or the downstream-side exhaust temperature sensor 14. Further, the fuel injection valve 10, the throttle valve 17 and the exhaust throttle valve 15 are electrically connected to the ECU 20. These components are controlled by the ECU 20.

< Catalyst Temperature Raise-Up Control>

Given next is an explanation of catalyst temperature raise-up control for raising the temperature of the oxidation catalyst 12 according to the first embodiment. The first embodiment will exemplify an example of the catalyst temperature raise-up control when oxidizing and removing the PM deposited on the filter 11 in this case, the temperature of the oxidation catalyst 12 is raised up by executing the catalyst temperature raise-up control, whereby a temperature of the filter 11 is raised up to a temperature enabling the oxidation and removable of the PM by raising a temperature of the exhaust gas flowing in the filter 11.

Note that the execution of the catalyst temperature raise-up control is not limited to the timing when oxidizing and removing the PM deposited on the filter 11. For instance, if the oxidation catalyst 12 or the filter 11 is replaced with the NOx storage reduction catalyst and when reducing SOx occluded in this NOx storage reduction catalyst, the catalyst temperature raise-up control according to the first embodiment may be applied.

Under the catalyst temperature raise-up control according to the first embodiment, when a temperature of the oxidation catalyst 12 is lower than a lower limit value T1 of an activation temperature, the temperature of the oxidation catalyst 12 is raised by executing exhaust gas temperature raise-up control for raising the temperature of the exhaust gas discharged from the internal combustion engine 1.

Under the exhaust gas temperature raise-up control, the exhaust throttling for controlling the exhaust gas flow rate may be done by controlling the exhaust throttle valve 15 in a valve-closing direction. Further, in the internal combustion engine 1, after fuel injection that is sub fuel injection which is carries out from the fuel injection valve 10 at later timing than main fuel injection and at ignition timing in a combustion cycle of the internal combustion engine 1 may be conducted. Herein, the ignition timing connotes timing of igniting a large proportion of the injected fuel when injecting the fuel from the fuel injection valve 10. A method of raising the temperature of the exhaust gas when executing the exhaust gas temperature raise-up control is determined based on an operation state of the internal combustion engine 1 at that time etc.

Then, the oxidation catalyst 12 comes to an activation state when the temperature of the oxidation catalyst 12 reaches the activation temperature, at which time post fuel injection is performed by carrying out the sub fuel injection from the fuel injection valve 10 at the later timing than the main fuel injection and at non-ignition timing in the combustion cycle of the internal combustion engine 1. Through this post fuel injection, the oxidation catalyst 12 is supplied with an unburned fuel, and the temperature of the oxidation catalyst 12 is raised up to a target temperature Tt.

In the first embodiment, this target temperature Tt is a temperature, if the temperature of the oxidation catalyst 12 reaches this target temperature Tt, at which the filter 11 comes to have the temperature enabling the oxidation and the removal of the PM and is refrained from excessively rising in its temperature. The target temperature Tt is predetermined by an experiment or a like manner.

< Oxidation Catalyst Temperature When Executing Post Fuel Injection >

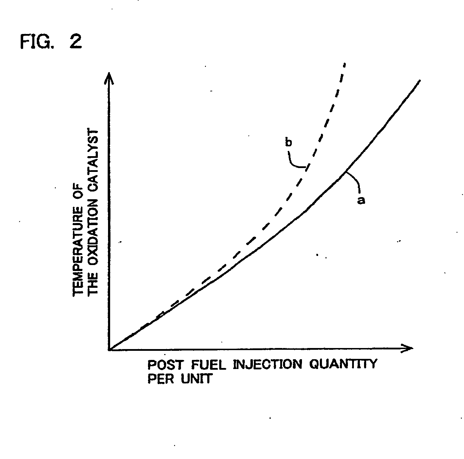

Herein, under the catalyst temperature raise-up control, a temperature of the oxidation catalyst 12 when executing the post fuel injection in a state of the exhaust throttling being conducted by the exhaust throttle valve 15, will be explained with reference to FIG. 2. FIG. 2 is a graph showing a relationship between a post fuel injection quantity per unit and a temperature of the oxidation catalyst 12. In FIG, 2, the axis of ordinates represents the temperature of the oxidation catalyst 12, and the axis of abscissa represents the post fuel injection quantity per unit. Further, a solid line a represents a case of executing the post fuel injection in the state of the exhaust throttling being conducted by the exhaust throttle valve 15, and a broken line b indicates a case of executing the post fuel injection in a state of the exhaust throttling not being conducted by the exhaust throttle valve 15.

When the exhaust throttle valve 15 effects the exhaust throttling, a pressure within the exhaust passage 9 disposed upstream of the exhaust throttle valve 15 rises, and hence the fuel injected by the post fuel injection gets hard to be discharged in an unburned state from the cylinder 2. Then, the fuel remaining within the cylinder 2 in the fuel injected by the post fuel injection is burned in the cylinder 2 in the next combustion cycle, and consequently there might be a case where the unburned fuel supplied to the oxidation catalyst 12 becomes smaller than in the case of the exhaust throttling not being conducted by the exhaust throttle valve 15.

In such a case, as shown in FIG. 2, if the post fuel injection is carried out in such a way that the post fuel injection quantity per unit is kept equal, the temperature of the oxidation catalyst 12 in the case of the exhaust throttling being conducted by the exhaust throttle valve 15 becomes lower than in the case of the exhaust throttling not being conducted by the exhaust throttle valve 15.

< Control of Post Fuel Injection Quantity per Unit Post>

Such being the case, in the first embodiment, in the case of executing the post fuel injection under the catalyst temperature raise-up control, when the exhaust throttling is performed by the exhaust throttle valve 15, the post fuel injection quantity per unit is set larger than when the exhaust throttling is not performed by the exhaust throttle valve 15.

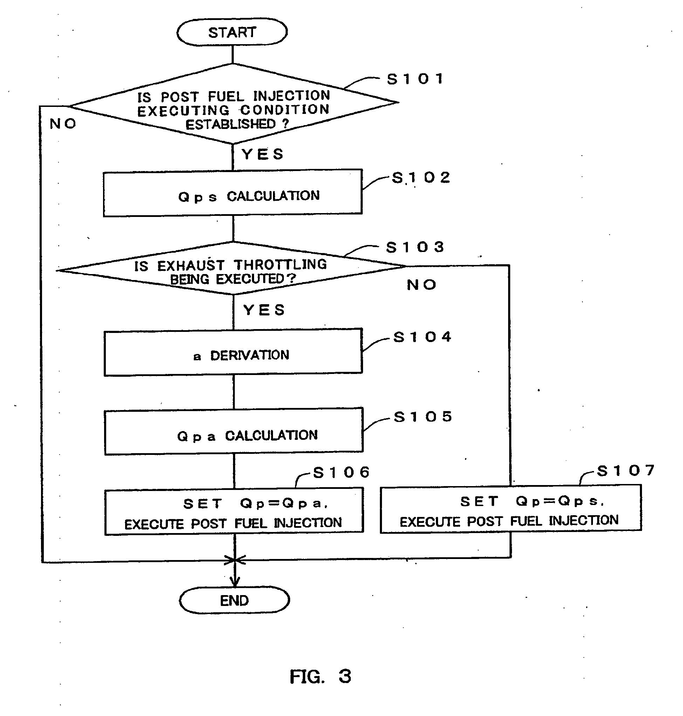

The control of the post fuel injection quantity per unit post when executing the post fuel injection under the catalyst temperature raise-up control according to the first embodiment will hereinafter be explained with reference to FIG. 3. FIG. 3 is a flowchart showing a control routine of the post fuel injection quantity per unit control according to the first embodiment. This control routine is stored beforehand on the ECU 20 and is executed each time a crank shaft rotates through a specified crank angle during the operation of the internal combustion engine 1.

In the present routine, the ECU 20, to start with, in S101, judges whether a post fuel injection executing condition is established or not. Herein, the post fuel injection executing condition implies, as explained above, the case where the catalyst temperature raise-up control is carried out, and the oxidation catalyst 12 comes to the activation state. In S101, if judged affirmative, the ECU 20 advances to S102, and if judged negative, the ECU20 temporarily finishes executing the present routine.

In S102, the ECU 20 calculates, based on a difference $\Delta T$ between the target temperature Tt and a temperature Tc of the oxidation catalyst 12 (which will hereinafter be simply termed a catalyst temperature difference $\Delta T$) and based on an intake air quantity Gn, a reference post fuel injection quantity per unit Qps defined as the post fuel injection quantity per unit serving as the reference. Herein, a relationship between the catalyst temperature difference $\Delta T$, the intake air quantity Gn and the reference post fuel injection quantity per unit Qps is predetermined by an experiment or a like manner and is stored as a map, wherein the reference post fuel injection quantity per unit Qps may be calculated (derived) from the map.

Next, the ECU 20 advances to S103 and judges whether the exhaust throttle valve 15 conducts the exhaust throttling or not. In S103, if judged affirmative, the ECU 20 advances to S104, and if judged negative, the ECU20 advances to S107.

The ECU 20 advancing to S107 executes the post fuel injection in a way that sets the post fuel injection quantity per unit Qp as the reference post fuel injection quantity per unit Qps, and terminates the execution of the present control routine.

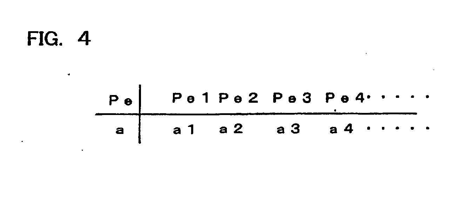

On the other hand, the ECU 20 advancing to S104 derives a correction coefficient a for calculating a correction post fuel injection quantity per unit Qpa in S105, which will be mentioned later on, from a an upstream-side exhaust passage pressure Pe that is detected by the exhaust pressure sensor 18. Herein, as shown in FIG. 4, a map showing a relationship between the intra upstream-side exhaust passage pressure Pe and the correction coefficient a is previously stored on the ECU 20, wherein the correction coefficient a is derived from this map. In this map, the correction coefficient a takes a positive value and becomes larger as the intra upstream-side exhaust passage pressure Pe gets higher.

Next, the ECU 20 advances to S105 and calculates the correction coefficient a for calculating the correction post fuel injection quantity per unit Qpa in a way that multiplies the reference post fuel injection quantity per unit Qps by the correction coefficient a.

Next, the ECU 20 advances to S106, wherein the ECU 20 executes the post fuel injection by setting the post fuel injection quantity per unit Qp as the correction post fuel injection quantity per unit Qpa, and temporarily finishes this control routine.

According to the control routine explained so far, when executing the post fuel injection, in the case of the exhaust throttling being conducted by the exhaust throttle valve 15, the post fuel injection quantity per unit is larger than in the case of the exhaust throttling not being conducted by the exhaust throttle valve 15.

Moreover, in the state of the exhaust throttling being conducted by the exhaust throttle valve 15, the intra upstream-side exhaust passage pressure Pe takes a different value depending on an opening degree of the exhaust throttle valve 15, the operation state of the internal combustion engine 1, and so on. Then, when conducting the post fuel injection in this state, the post fuel injection quantity per unit becomes larger as the intra upstream-side exhaust passage pressure Pe gets higher.

According to the first embodiment, even in the case of executing the post fuel injection in the state of performing the exhaust throttling, the oxidation catalyst 12 can be supplied with the unburned fuel having a quantity necessary for raising the temperature of the oxidation catalyst 12 up to the target temperature Tt. Hence, under the catalyst temperature raise-up control, the oxidation catalyst 12 can be controlled at the target temperature Tt with high accuracy. Owing to this control, the PM deposited on the filter 11 can be oxidized and removed more preferably.

Note that in the first embodiment, none of the exhaust pressure sensor 18 being provided, if the intake passage 8 disposed downstream of the throttle valve 17 is provided with an intake pressure sensor that outputs an electric signal corresponding to a pressure within the intake passage 8, the intra upstream-side exhaust passage pressure Pe is estimated from an output value of this intake pressure sensor, and the correction coefficient a may be derived based on this estimated value.

(Second Embodiment)

Outlines of configurations of the internal combustion engine and the intake/exhaust systems thereof in a second embodiment are the same as those in the first embodiment discussed above, and hence their explanations are omitted. Further, in the second embodiment also, the same catalyst temperature raise-up control as in the first embodiment discussed above is carried out.

< Post fuel injection quantity per unit Control >

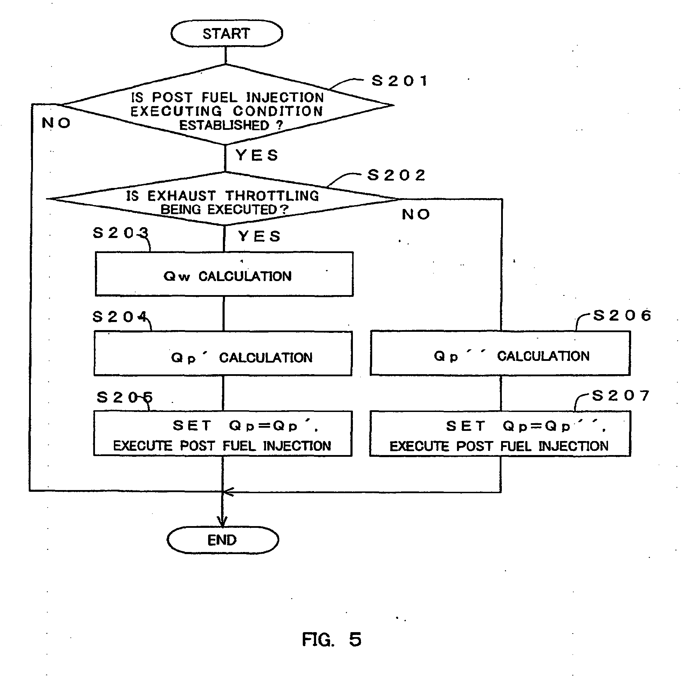

Herein, the post fuel injection quantity per unit control when effecting the post fuel injection under the catalyst temperature raise-up control according to the second embodiment, will be described with reference to FIG. 5. FIG. 5 is a flowchart showing a control routine of the post fuel injection quantity per unit control according to the second embodiment. Note that, in the second embodiment, the post fuel injection quantity per unit is set to a post fuel injection quantity per combustion cycle. The present control routine is stored beforehand on the ECU 20 and is executed each time the crank shaft rotates through a specified crank angle during the operation of the internal combustion engine 1.

In this control routine, the ECU 20, to begin with, in S201, judges whether the post fuel injection executing condition is established or not. Herein, the post fuel injection executing condition is the same as the post fuel injection executing condition in the first embodiment described above. In S201, if judged affirmative, the ECU 20 advances to S202, and if judged negative, the ECU 20 temporarily finishes executing the present routine.

In S202, the ECU 20 judges whether the exhaust throttling is conducted by the exhaust throttle valve 15 or not. In S202, if judged affirmative, the ECU 20 advances to S203, and if judged negative, the ECU 20 advances to S206.

The ECU 20 diverting to S206 calculates a post fuel injection quantity per unit Qp" in the following formula (1).

$$Qp" = Gn \times \Delta T \times C \dots (1)$$

In the formula (1), Gn represents an intake air quantity, and $\Delta T$ represents a catalyst temperature difference. Further, C indicates a conversion factor for converting a product of the intake air quantity Gn and the catalyst temperature difference $\Delta T$ into a post fuel injection quantity per unit. This conversion factor C is a value that is predetermined based on an experiment or the like. The ECU 20, after calculating the post fuel injection quantity per unit Qp" in S206, advances to S207.

in S207, the ECU 20 executes the post fuel injection in a way that sets the post fuel injection quantity per unit Qp to the post fuel injection quantity per unit Qp", and temporarily finishes executing the present control routine.

On the other hand, the ECU 20 advancing to S203 calculates an operation gas quantity Qw within the cylinder 2 in the following formula (2).

$$Qw = (Pe/Pa) \times (273/(273 + Te)) \times \eta v \times (Vh/2) \times \gamma \ldots \text{(2)}$$

In the formula (2), Pe denotes, as in the first embodiment discussed above, an intra upstream-side exhaust passage pressure, and Pa designates an atmospheric pressure detected by the atmospheric pressure sensor 19. Moreover, Te represents an exhaust temperature, detected by the upstream-side exhaust temperature sensor 13, within the exhaust passage 9 disposed upstream of the oxidation catalyst 12, and $\eta v$ indicates a volumetric efficiency. Moreover, Vh represents a cylinder capacity, and $\gamma$ designates an air density.

Next, the ECU 20 advances to S204 and calculates a post fuel injection quantity per unit Qp' in the following formula (3).

$$Qp' = Qw \times \Delta T \times C \ldots \text{(3)}$$

In the formula (3), $\Delta T$ and C represent, as in the formula (1), the catalyst temperature difference and the conversion factor, respectively. The ECU 20, after calculating the post fuel injection quantity per unit Qp' in S204, advances to S205.

In S205, the ECU 20 executes the post fuel injection in a way that sets the post fuel injection quantity per unit Qp to the post fuel injection quantity per unit Qp', and temporarily finishes executing the present control routine.

According to the control routine explained above, when executing the post fuel injection in the state of the exhaust throttling not being conducted by the exhaust throttle valve 15, the post fuel injection quantity per unit Qp" is determined based on the intake air quantity Gn and the catalyst temperature difference $\Delta T$. This is because when the exhaust throttling is not conducted by the exhaust throttle valve 15, the operation gas quantity Qw in the cylinder 2 is approximately the same as the intake air quantity Gn.

On the other hand, when the exhaust throttling is conducted by the exhaust throttle valve 15, the residual gas is easy to increase, and therefore the operation gas quantity Qw in the cylinder 2 possibly gets larger by the residual gas quantity than the intake air quantity Gn. Therefore, according to the control routine described so far, when executing the post fuel injection in the state of the exhaust throttling being conducted by the exhaust throttle valve 15, the operation gas quantity Qw in the cylinder 2 is calculated based on the intra upstream-side exhaust passage pressure Pe and the upstream-side exhaust temperature Te. Then, the post fuel injection quantity per unit Qp' is determined based on this operation gas quantity Qw and the catalyst temperature difference $\Delta T$.

Therefore, according to the second embodiment, in the case of the exhaust throttling being conducted by the exhaust throttle valve 15 when executing the post fuel injection, the post fuel injection quantity per unit can be set larger than in the case of the exhaust throttling not being conducted by the exhaust throttle valve 15. As a result, even in the case of the exhaust throttling being conducted when executing the post fuel injection, the oxidation catalyst 12 can be supplied with the unburned fuel having a quantity required for raising the temperature of the oxidation catalyst 12 up to the target temperature Tt. Hence, under the catalyst temperature raise-up control, the oxidation catalyst 12 can be controlled at the target temperature Tt with high accuracy.

It is to be noted that, in the second embodiment, neither the exhaust pressure sensor 18 nor the upstream-side exhaust temperature sensor 13 being provided, if the intake passage 8 disposed downstream of the throttle valve 17 is provided with an intake pressure sensor that outputs an electric signal corresponding to a pressure within the intake passage 8 and with an intake temperature sensor that outputs an electric signal corresponding to an intake temperature within the intake passage 8, the intra upstream-side exhaust passage pressure Pe is estimated from an output value of the intake pressure sensor, an upstream-side exhaust temperature Te is estimated from an output value of the intake temperature sensor, and the operation gas quantity Qw may be calculated based on these estimated values.

According to the catalyst temperature raise-up system of the internal combustion engine in the present invention, when raising the temperature of the catalyst having the oxidizing function that is provided on the exhaust passage of the internal combustion engine, the temperature of the catalyst can be controlled at the target temperature with the high accuracy.

While the invention has been described in terms of preferred embodiments, those skilled in the art will recognize that the invention can be practiced with modifications within scope of the appended claims.

The present invention, in a catalyst temperature raise-up system of an internal combustion engine that raises a temperature of a catalyst provided on an exhaust passage of the internal combustion engine and having an oxidizing function, aims at controlling, when raising the temperature of the catalyst, the temperature of the catalyst at a target temperature with higher accuracy. In a case of exhaust throttling being conducted when executing post fuel injection in order to raise the temperature of the catalyst provided on the exhaust passage of the internal combustion engine and having the oxidizing function, a fuel injection quantity per unit time injected by the post fuel injection is set larger than in a case of the exhaust throttling not being conducted.

## Claims

1.  A catalyst temperature raise-up system of an internal combustion engine, comprising post fuel injection means (10) executing sub fuel injection within a cylinder (2) at later timing than main fuel injection and at non-ignition timing in a combustion cycle of said internal combustion engine (1),
    when a catalyst (12) provided on an exhaust passage (9) of said internal combustion engine (1) and having an oxidizing function is in an activation state, said catalyst (12) being supplied with an unburned fuel by said post fuel injection means (10) executing the sub fuel injection, and thereby the temperature of the catalyst (12) being raised up to a target temperature,
    wherein further comprising an exhaust throttle valve (15) provided on said exhaust passage (9) disposed downstream of said catalyst (12), and
    **characterized in that** when the sub fuel injection is executed by said post fuel injection means (10) in a state of exhaust throttling being conducted by said exhaust throttle valve (15), an sub fuel injection quantity per unit time injected by said post fuel injection means (10) is set larger than when the sub fuel injection is executed by said post fuel injection means (10) in a state of exhaust throttling not being conducted by said exhaust throttle valve (15).

2.  A catalyst temperature raise-up system of an internal combustion engine according to claim 1, further comprising intra exhaust passage pressure detecting means (18) detecting a pressure within said exhaust passage (9) disposed upstream of said exhaust throttle valve (15),
    wherein when the sub fuel injection is executed by said post fuel injection means (10) in the state of the exhaust throttling being conducted by said exhaust throttle valve (15), the sub fuel injection quantity per unit time injected by said post fuel injection means (10) is set larger as the pressure within said exhaust passage (9) that is detected by said intra exhaust passage pressure detecting means (18) is higher.

3.  A catalyst temperature raise-up system of an internal combustion engine according to claim 1, further comprising:

    catalyst temperature detecting means (13, 14) detecting the temperature of said catalyst (12);
    intra exhaust passage pressure detecting means (18) detecting a pressure within said exhaust passage (9) disposed upstream of said exhaust throttle valve (15);
    exhaust temperature detecting means (13) detecting an exhaust temperature within said exhaust passage (9) disposed upstream of said exhaust throttle valve (15); and
    operation gas quantity calculating means (20) calculating an operation gas quantity within said cylinder (2) on the basis of the pressure within said exhaust passage (9) that is detected by said intra exhaust passage pressure detecting means (18) and on the basis of the exhaust temperature detected by said exhaust temperature detecting means (13),
    wherein when the sub fuel injection is executed by said post fuel injection means (10) in the state of the exhaust throttling being conducted by said exhaust throttle valve (15), the sub fuel injection quantity per unit time injected by said post fuel injection means (10) is determined based on a difference between the temperature of said catalyst (12) that is detected by said catalyst temperature detecting means (13, 14) and the target temperature and based on the operation gas quantity calculated by said operation gas quantity calculating means (20).

## Patentansprüche

1.  System zur Erhöhung einer Katalysatortemperatur einer Brennkraftmaschine, mit einer Kraftstoff-Nacheinspritzungseinrichtung (10), die eine Kraftstoffnebeneinspritzung innerhalb eines Zylinders (2) zu einem späteren Zeitpunkt als eine Kraftstoffhaupteinspritzung und zu einem Nicht-Zündzeitpunkt in einem Arbeitstakt der Brennkraftmaschine (1) durchführt, wobei
    wenn ein Katalysator (12), der in einem Abgaskanal (9) der Brennkraftmaschine (1) vorgesehen ist und eine Oxidationsfunktion hat, in einem Aktivierungszustand ist, der Katalysator (12) mit einem unverbrannten Kraftstoff durch die Kraftstoff-Nacheinspritzungseinrichtung (10) beliefert wird, die die Kraftstoffnebeneinspritzung durchführt, und dadurch die Temperatur des Katalysators (12) auf eine Zieltemperatur erhöht wird,
wobei es ferner eine Abgasdrosselklappe (15) aufweist, die in dem Abgaskanal (9) stromabwärts des Katalysators (12) angeordnet vorgesehen ist, und
**dadurch gekennzeichnet, dass** wenn die Kraftstoffneben-einspritzung durch die Kraftstoff-Nacheinspritzungseinrichtung (10) in einem Zustand durchgeführt wird, in dem die Abgasdrosselung durch die Abgasdrosselklappe (15) ausgeführt wird, eine Menge der Kraftstoffnebeneinspritzung je Zeiteinheit, die durch die Kraftstoff-Nacheinspritzungseinrichtung (10) eingespritzt wird, größer festgelegt wird als wenn die Kraftstoffnebeneinspritzung durch die Kraftstoff-Nacheinspritzungseinrichtung (10) in einem Zustand durchgeführt wird, in dem die Abgasdrosselung durch die Abgasdrosselklappe (15) nicht ausgeführt wird.

2. System zur Erhöhung einer Katalysatortemperatur einer Brennkraftmaschine nach Anspruch 1, ferner mit einer Druckerfassungseinrichtung (18) innerhalb des Abgaskanals, die einen Druck innerhalb des Abgaskanals (9) erfassend stromaufwärts der Abgasdrosselklappe (15) angeordnet ist,
wobei wenn die Kraftstoffnebeneinspritzung durch die Kraftstoff-Nacheinspritzungseinrichtung (10) in dem Zustand durchgeführt wird, in dem die Abgasdrosselung durch die Abgasdrosselklappe (15) ausgeführt wird, eine Menge der Kraftstoffnebeneinspritzung je Zeiteinheit, die durch die Kraftstoff-Nacheinspritzungseinrichtung (10) eingespritzt wird, bei steigendem Druck innerhalb des Abgaskanals (9), der durch die Druckerfassungseinrichtungen (18) innerhalb des Abgaskanals erfasst wird, größer festgelegt wird.

3. System zur Erhöhung einer Katalysatortemperatur einer Brennkraftmaschine nach Anspruch 1, ferner mit Katalysatortemperaturerfassungseinrichtungen (13, 14), die die Temperatur des Katalysators (12) erfassen;
einer Druckerfassungseinrichtung (18) innerhalb des Abgaskanals, die einen Druck innerhalb des Abgaskanals (9) erfassend stromaufwärts der Abgasdrosselklappe (15) angeordnet ist;
einer Abgastemperaturerfassungseinrichtung (13), die eine Abgastemperatur innerhalb des Abgaskanals (9) erfassend stromaufwärts der Abgasdrosselklappe (15) angeordnet ist; sowie
einer Arbeitsgasmengenberechnungseinrichtung (20), die eine Arbeitsgasmenge innerhalb des Zylinders (2) basierend auf dem Druck innerhalb des Abgaskanals (9), der durch die Druckerfassungseinrichtung (18) innerhalb des Abgaskanals erfasst wird, und basierend auf der Abgastemperatur, die durch die Abgastemperaturerfassungseinrichtung (13) erfasst wird, berechnet
wobei wenn die Kraftstoffnebeneinspritzung durch die Kraftstoff-Nacheinspritzungseinrichtung (10) in einem Zustand durchgeführt wird, in dem die Abgasdrosselung durch die Abgasdrosselklappe (15) ausgeführt wird, die Menge der Kraftstoffnebeneinspritzung je Zeiteinheit, die durch die Kraftstoff-Nacheinspritzungseinrichtung (10) eingespritzt wird, basierend auf einer Differenz zwischen der Temperatur des Katalysators (12), die durch die Katalysatortemperaturerfassungseinrichtungen (13, 14) erfasst wird, und einer Zieltemperatur sowie basierend auf der Arbeitsgasmenge bestimmt wird, die durch die Arbeitsgasmengenberechnungseinrichtung (20) berechnet wird.

## Revendications

1. Système d'élévation de température de catalyseur d'un moteur à combustion interne, comprenant un moyen (10) de post injection de carburant exécutant une injection secondaire de carburant dans un cylindre (2) à un moment ultérieur à celui d'une injection principale de carburant et à un moment de non-allumage dans un cycle de combustion dudit moteur à combustion interne (1),
lorsqu'un catalyseur (12) prévu sur un passage d'échappement (9) dudit moteur à combustion interne (1) et présentant une fonction d'oxydation est dans un état d'activation, ledit catalyseur (12) étant alimenté en carburant non brûlé par ledit moyen (10) de post injection de carburant exécutant une injection secondaire de carburant, et ainsi la température du catalyseur (12) étant élevée à une température cible,
dans lequel il comprend en outre un papillon des gaz d'échappement (15) prévu sur ledit passage d'échappement (9) disposé en aval dudit catalyseur (12), et
**caractérisé en ce que** lorsque l'injection secondaire de carburant est exécutée par ledit moyen (10) de post injection de carburant dans un état où l'étranglement des gaz d'échappement étant conduit par ledit papillon des gaz d'échappement (15), une quantité d'injection secondaire de carburant par unité de temps injectée par ledit moyen (10) de post injection de carburant est réglée de manière à être plus grande que celle lorsque l'injection secondaire de carburant est exécutée par ledit moyen (10) de post injection de carburant dans un état où l'étranglement des gaz d'échappement n'étant pas conduit par ledit papillon des gaz d'échappement (15).

2. Système d'élévation de température de catalyseur d'un moteur à combustion interne selon la revendication 1, comprenant en outre un moyen (18) de détection de pression à l'intérieur du passage d'échappement détectant une pression à l'intérieur dudit passage d'échappement (9) disposé en amont dudit papillon des gaz d'échappement (15),

dans lequel lorsque l'injection secondaire de carburant est exécutée par ledit moyen (10) de post injection de carburant dans l'état où l'étranglement des gaz d'échappement étant conduit par ledit papillon des gaz d'échappement (15), la quantité d'injection secondaire de carburant par unité de temps injectée par ledit moyen (10) de post injection de carburant est réglée de manière à être plus grande à mesure que la pression à l'intérieur dudit passage d'échappement (9) qui est détectée par ledit moyen (18) de détection de pression à l'intérieur du passage d'échappement est plus élevée.

3. Système d'élévation de température de catalyseur d'un moteur à combustion interne selon la revendication 1, comprenant en outre :

un moyen (13, 14) de détection de température de catalyseur détectant la température dudit catalyseur (12) ;
un moyen (18) de détection de pression à l'intérieur du passage d'échappement détectant une pression à l'intérieur dudit passage d'échappement (9) disposé en amont dudit papillon des gaz d'échappement (15) ;
un moyen (13) de détection de température d'échappement détectant une température d'échappement à l'intérieur dudit passage d'échappement (9) disposé en amont dudit papillon des gaz d'échappement (15) ; et
un moyen (20) de calcul de quantité de gaz de fonctionnement calculant une quantité de gaz de fonctionnement à l'intérieur dudit cylindre (2) sur la base de la pression à l'intérieur dudit passage d'échappement (9) qui est détectée par ledit moyen (18) de détection de pression à l'intérieur du passage d'échappement et sur la base de la température d'échappement détectée par ledit moyen (13) de détection de température d'échappement,
dans lequel lorsque l'injection secondaire de carburant est exécutée par ledit moyen (10) de post injection de carburant dans l'état où l'étranglement des gaz d'échappement étant conduit par ledit papillon des gaz d'échappement (15), la quantité d'injection secondaire de carburant par unité de temps injectée par ledit moyen (10) de post injection de carburant est déterminée sur la base d'une différence entre la température dudit catalyseur (12) qui est détectée par ledit moyen (13, 14) de détection de température de catalyseur et la température cible et sur la base de la quantité de gaz de fonctionnement calculée par ledit moyen (20) de calcul de quantité de gaz de fonctionnement.

FIG. 1

FIG. 2

Y-axis: TEMPERATURE OF THE OXIDATION CATALYST

X-axis: POST FUEL INJECTION QUANTITY PER UNIT

START

IS POST FUEL INJECTION
EXECUTING CONDITION
ESTABLISHED ?  ⟋ S 1 0 1

NO

YES

Q p s CALCULATION  ⟋ S 1 0 2

IS EXHAUST THROTTLING
BEING EXECUTED?  ⟋ S 1 0 3

NO

YES

a DERIVATION  ⟋ S 1 0 4

Q p a CALCULATION  ⟋ S 1 0 5

SET Qp=Qpa,
EXECUTE POST FUEL INJECTION  ⟋ S 1 0 6

SET Qp=Qps,
EXECUTE POST FUEL INJECTION  ⟋ S 1 0 7

END

FIG. 3

FIG. 4

| Pe | Pe1 Pe2 Pe3 Pe4· · · · · |
|----|--------------------------|
| a | a1 a2 a3 a4 · · · · · |

START

S 2 0 1

IS POST FUEL INJECTION
EXECUTING CONDITION
ESTABLISHED ?

NO

YES

S 2 0 2

IS EXHAUST THROTTLING
BEING EXECUTED?

NO

S 2 0 3

YES

Qw CALCULATION

S 2 0 4

Q p ´ CALCULATION

S 2 0 6

Q p ´ ´ CALCULATION

S 2 0 5

SET Q p = Q p ´,
EXECUTE POST FUEL INJECTION

S 2 0 7

SET Q p = Q p ´ ´,
EXECUTE POST FUEL INJECTION

END

FIG. 5

**EP 1 662 123 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004150415 A
- JP 3536739 B

- JP 2000179326 A